# EUROPÄISCHE PATENTSCHRIFT

(11) **EP 3 658 812 B1**
(45) Veröffentlichungstag und Bekanntmachung des Hinweises auf die Patenterteilung: **19.02.2025**
(21) Anmeldenummer: 18722474.6
(22) Anmeldetag: 03.05.2018
(51) Int. Cl.: F16L 27/02, F16L 47/18, F16L 37/50, F16L 37/14, F16L 27/12, F16L 37/52

(54) **FLEXIBLES KUPPLUNGSELEMENT MIT TOLERANZAUSGLEICH ZUR FLEXIBLEN VERBINDUNG ZWEIER MEDIENFÜHRENDER ELEMENTE**
FLEXIBLE COUPLING ELEMENT WITH TOLERANCE COMPENSATION FOR FLEXIBLY CONNECTING TWO MEDIA-GUIDING ELEMENTS
ÉLÉMENT DE COUPLAGE FLEXIBLE AVEC COMPENSATION DE TOLÉRANCES POUR LA CONNEXION FLEXIBLE DE DEUX ÉLÉMENTS CONDUCTEURS DE FLUIDES

(30) Priorität: 27.07.2017 DE 102017212907
(43) Veröffentlichungstag der Anmeldung: 03.06.2020
(73) Patentinhaber: ContiTech Techno-Chemie GmbH, 61184 Karben (DE)
(72) Erfinder: FLACH, Axel, 34537 Bad Wildungen (DE); KREIDNER, Harald, 34346 Hann. Münden (DE)
(74) Vertreter: Continental Corporation
(86) Internationale Anmeldenummer: PCT/EP2018/061254
(87) Internationale Veröffentlichungsnummer: WO 2019/020230

(56) Entgegenhaltungen:
- EP-A2- 1 850 049
- DE-A1- 102014 211 844
- DE-A1- 102014 212 441
- US-A- 3 584 902
- US-A1- 2011 148 098
- US-A1- 2016 238 173

## Beschreibung

Die Erfindung betrifft ein Kupplungselement mit Toleranzausgleich zur flexiblen Verbindung zweier medienführender Elemente, insbesondere eines Rohres oder Schlauches mit einem anderen Rohr oder Schlauch oder einem Aggregat, mit einem ersten Bauteil zur Verbindung mit dem ersten Element, und einem zweiten Bauteil zur Verbindung mit dem zweiten Element, wobei das erste Bauteil und das zweite Bauteil eine Vorrichtung zur unverlierbaren Verbindung aufweisen und das erste Bauteil und das zweite Bauteil eine gemeinsame Längsrichtung besitzen, und das erste Bauteil und das zweite Bauteil in Richtung der gemeinsamen Längsrichtung translatorisch zueinander verschiebbar sind, und dass das erste Bauteil und das zweite Bauteil um die gemeinsame Längsrichtung rotatorisch zueinander verdrehbar sind, und dass das erste Bauteil und das zweite Bauteil senkrecht zu der gemeinsamen Längsrichtung kardanisch zueinander verkippbar sind.

Zum Transport von Medien wie z.B. Fluiden, Gasen oder auch pastösen Medien werden z.B. Leitungen, Schläuche, Rohre etc. verwendet. Diese können untereinander oder z.B. an Aggregate angeschlossen werden, um den Medienfluss zu realisieren. Beispielsweise werden im Automobilbereich Fluide wie z.B. Kraftstoffe, Öle, Zusatzstoffe (AdBlue^{®}) und Kühlmittel oder Gase wie z.B. Ladeluft derartig geleitet.

Zur Herstellung dieser Verbindung bzw. dieses Anschlusses werden Kupplungen verwendet. Diese dienen der sicheren, dauerhaften und mediendichten Verbindung der Elemente.

Diese Leitungen sind fertigungsbedingt in ihrem Verlauf mit mehr oder weniger großen Toleranzen behaftet, die je nach Anwendungsfall wie z.B. dem Einbauraum im Fahrzeug zulässig sein können. Somit können Leitungen verwendet werden, die innerhalb der Kleinst- und Größtmaße der Toleranzen des Anwendungsfalls liegen.

Das Maß der Toleranzen bestimmt sich dabei je nach Anwendungsfall danach, dass der Verlauf der Leitung durch die zulässigen Toleranzen nicht beeinträchtigt wird, z.B. durch die Kollision mit Nachbarbauteilen. Auch müssen trotz der zulässigen Toleranzen die Befestigungspunkte (Stützstellen) für die Leitung eingehalten werden, damit sie mit den Gegenpositionen (Anschraubpunkten) z.B. am Motor übereinstimmen.

Die DE 10 2014 211 844 A1 zeigt ein gattungsgemäßes Kupplungselement, welches zur unverlierbaren Verbindung eine Rastverbindung aufweist. Dabei beruht die Verrastung auf einschnappbaren Rastelementen. Diese müssen bei gleichzeitig hoher Festigkeit eine bestimmte Elastizität aufweisen, damit sie beim Einschnappen nicht brechen. Dazu sind relativ hochwertige Werkstoffe notwendig, wie z.B. ein glasfaserverstärktes PA 6.6, was zu erheblichen Kosten führt, da das gesamte Kupplungselement aus diesem Werkstoff hergestellt ist, obwohl nur für die Rastelemente eine entsprechende Elastizität bei hoher Festigkeit notwendig ist.

Die US 2011 148098 A1 offenbart ein Kupplungselement für eine Kraftstoffleitung eines Flugzeugs. Das Kupplungselement weist eine Muffe auf, in die ein Ende einer Fluidleitung eingesetzt wird. Das Ende der Fluidleitung ist mit einer O-Ring-Dichtung versehen, die beidseitig von zwei umlaufenden Gleitlagern flankiert wird, die einen etwas geringeren Durchmesser aufweisen als die O-Ring-Dichtung. Sowohl die O-Ring-Dichtung als auch die Gleitlager laufen auf einer Innenfläche der Muffe, was einen translatorischen, rotatorischen und kippbaren Toleranzausgleich ermöglicht. Diese konstruktive Ausgestaltung nimmt allerdings relativ viel Bauraum ein.

Die US 3584902 A offenbart eine Schnellkupplung für Fluidleitungen, bei der ein teilweises Lösen der Kupplungsteile unter allmählicher Druckentlastung ermöglicht wird, ohne dass diese durch einen hohen Fluiddruck auseinanderfliegen. Hierzu wird ein Kupplungselement mit einer Vielzahl von in Längsrichtung beabstandeten Schlitzen vorgeschlagen, in die jeweils eine Halteklammer eingesetzt werden kann, um die zu koppelnden Bauteile in einer vordefinierten Lage zueinander zu arretieren.

Der Erfindung lag daher die Aufgabe zugrunde, ein toleranzausgleichendes Kupplungselement der eingangs geschilderten Art so zu verbessern, dass der Einsatz von Werkstoffen mit hoher Festigkeit, aber geringen Ansprüchen an die Elastizität möglich ist.

Diese Aufgabe wird durch die kennzeichnenden Merkmale des Anspruchs 1 gelöst.

Diese Anordnung hat den Vorteil, dass keine Rastnasen erforderlich sind. Daher ist eine entsprechende Elastizität des Bauteils unnötig, so dass trotz hochfester Werkstoffe keine besonderen Anforderungen an die Elastizität bestehen.

In einer Weiterbildung der Erfindung ist der Sicherungsring derart ausgebildet, dass er aus dem Durchbruch des ersten Bauteils radial nach außen elastisch verformbar und entfernbar ist.

Diese Ausbildung hat den Vorteil, dass die Verbindung von erstem und zweitem Bauteil wieder lösbar ist.

In einer Weiterbildung der Erfindung weist das zweite Bauteil mindestens einen weiteren Durchbruch auf, durch die der korrekte Sitz des Sicherungsrings beobachtbar ist.

Auf diese Weise ist unproblematisch die sichere Verriegelung des Kupplungselementes überprüfbar.

Anhand der Zeichnung wird nachstehend ein Ausführungsbeispiel der Erfindung näher erläutert.

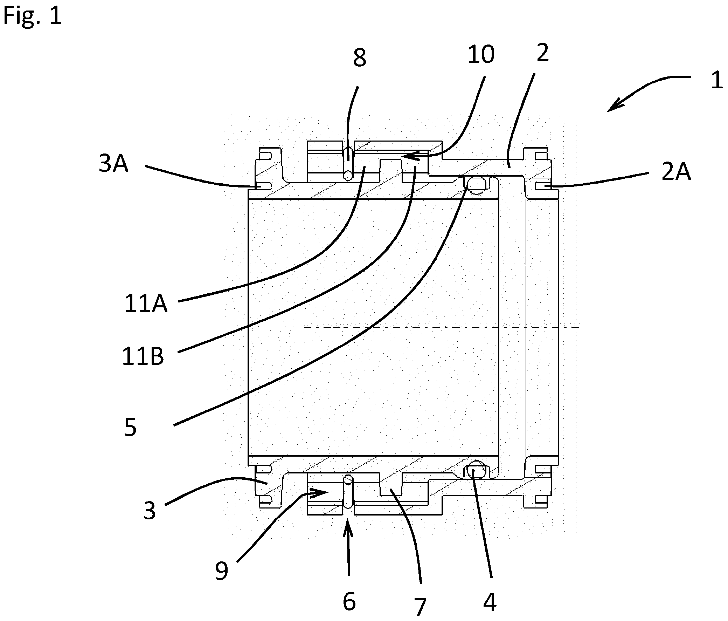

Die Fig. 1 zeigt einen Längsschnitt durch ein erfindungsgemäßes Kupplungselement 1 in fertig montiertem Zustand. Das Kupplungselement 1 weist ein erstes Bauteil 2 und ein zweites Bauteil 3 auf. Beide Bauteile 2 und 3 weisen jeweils eine Verbindungsstelle 2A, 3A zur Verbindung mit weiteren, hier nicht gezeigten fluidführenden Elementen auf.

Zwischen dem ersten und dem zweiten Bauteil 2, 3 ist eine O-Ring-Dichtung 4 in einer Nut 5 angeordnet, die die Dichtheit der Verbindung vom erstem Bauteil 2 mit dem zweitem Bauteil 3 sichert.

Das erste Bauteil 2 weist einen etwa schlitzförmigen, mindestens teilweise radial umlaufenden Durchbruch 6 auf.

Das zweite Bauteil 3 weist einen radial nach Außen weisenden, radial mindestens teilweise umlaufenden Wulst 7 auf, der in hier nicht sichtbarer Weise umlaufen derartig unterbrochen ist, dass sich ein nockenförmiger Verlauf des Wulstes 7 in Umfangsrichtung ergibt.

Ein hier metallisch ausgebildeter, federnder Sicherungsring 8 greift durch den Durchbruch 6 des ersten Bauteils 2 hindurch und kommt dabei hinter den Wulst 7 des zweiten Bauteils zu liegen.

Das erste Bauteil 2 weist einen Bereich 9 auf, der um den Wulst 7 des zweiten Bauteils herumgreift und vom Wulst 7 mit einem Spiel 10 in radialer Richtung und einem Spiel 11A und 11B in axialer Richtung beabstandet ist. Durch die Spiele 10 und 11A und 11B ist sichergestellt, dass das erste Bauteil 2 gegen das zweite Bauteil 3 sowohl translatorisch, rotatorisch und kardanisch kippend bewegbar ist.

Dadurch, dass der Sicherungsring 8 durch den Durchbruch 6 des ersten Bauteils 2 hindurch hinter den Wulst 7 des zweiten Bauteils zu liegen kommt, ist ein Auseinanderziehen der Bauteile 2, 3 nur im Bereich des Spieles 11A möglich, so dass die Bauteile 2 und 3 unverlierbar miteinander verbunden sind.

### Bezugszeichenliste

- 1: Kupplungselement
- 2: Erstes Bauteil des Kupplungselements 1
- 2A: Verbindungsstelle des ersten Bauteils 2
- 3: Zweites Bauteil des Kupplungselements 1
- 3A: Verbindungsstelle des zweiten Bauteils 3
- 4: O-Ring-Dichtung
- 5: Nut
- 6: Durchbruch im ersten Bauteil 2
- 7: Wulst des zweiten Bauteils 3
- 8: geschlitzter Sicherungsring
- 9: Bereich des ersten Bauteils
- 10: radiales Spiel
- 11A, 11B: axiales Spiel

## Patentansprüche

1. Kupplungselement (1) mit Toleranzausgleich zur flexiblen Verbindung zweier Elemente zur Führung von Medien, insbesondere eines Rohres oder Schlauches mit einem anderen Rohr oder Schlauch oder einem Aggregat, mit einem ersten Bauteil (2) zur Verbindung mit dem ersten Element, und einem zweiten Bauteil (3) zur Verbindung mit dem zweiten Element, wobei das erste Bauteil (2) und das zweite Bauteil (3) eine Vorrichtung zur unverlierbaren Verbindung aufweisen und das erste Bauteil (2) und das zweite Bauteil (3) eine gemeinsame Längsrichtung besitzen, und das erste Bauteil (2) und das zweite Bauteil (3) in Richtung der gemeinsamen Längsrichtung translatorisch zueinander verschiebbar sind, und dass das erste Bauteil (2) und das zweite Bauteil (3) um die gemeinsame Längsrichtung rotatorisch zueinander verdrehbar sind, und dass das erste Bauteil (2) und das zweite Bauteil (3) senkrecht zu der gemeinsamen Längsrichtung kardanisch zueinander verkippbar sind, **dadurch gekennzeichnet, dass** das erste Bauteil (2) einen Bereich (9) aufweist, der um einen einzigen mindestens teilweise radial umlaufenden Wulst (7) des zweiten Bauteils (3) herumgreift und vom Wulst (7) mit einem Spiel (10) in radialer Richtung und einem Spiel (11A, 11B) in axialer Richtung beabstandet ist, wobei die unverlierbare Verbindung einen geschlitzten Sicherungsring (8) aufweist und das erste Bauteil (2) mindestens einen mit dem Sicherungsring (8) korrespondierenden, mindestens teilweise radial umlaufenden Durchbruch (6) aufweist, wobei in montiertem Zustand der Verbindung der Sicherungsring (8) durch den Durchbruch (6) des ersten Bauteils (2) hindurchgreift und derart hinter den Wulst (7) des zweiten Bauteils (3) zu liegen kommt, dass eine translatorische und rotatorische und kardanisch kippende Bewegung des ersten (2) gegen das zweite (3) Bauteil möglich ist, ein Auseinanderziehen der beiden Bauteile (2, 3) jedoch verhindert ist.

2. Kupplungselement (1) nach Anspruch 1, **dadurch gekennzeichnet, dass** der Sicherungsring (8) derart ausgebildet ist, dass er aus dem Durchbruch (6) des ersten Bauteils (2) radial nach außen elastisch verformbar und entfernbar ist.

3. Kupplungselement (1) nach Anspruch 1 oder 2, **dadurch gekennzeichnet, dass** das zweite Bauteil (3) mindestens einen weiteren Durchbruch aufweist, durch die der korrekte Sitz des Sicherungsrings beobachtbar ist.

## Claims

1. Coupling element (1) with tolerance compensation for flexibly connecting two elements for conducting media, in particular a tube or hose to another tube or hose or an assembly, with a first component (2) for connecting to the first element, and a second component (3) for connecting to the second element, wherein the first component (2) and the second component (3) have an apparatus for captive connection, and the first component (2) and the second component (3) have a common longitudinal direction, and the first component (2) and the second component (3) can be displaced in a translational manner with respect to one another in the direction of the common longitudinal direction, and wherein the first component (2) and the second component (3) can be turned rotationally with respect to one another about the common longitudinal direction, and wherein the first component (2) and the second component (3) can be tilted cardanically with respect to one another perpendicularly with respect to the common longitudinal direction, **characterized in that** the first component (2) has a region (9) which engages around a single bead (7), running around at least partially radially, of the second component (3), and is spaced apart from the bead (7) with a play (10) in the radial direction and a play (11A, 11B) in the axial direction, wherein the captive connection has a slotted securing ring (8), and the first component (2) has at least one aperture (6) which runs around radially at least partially and corresponds with the securing ring (8), wherein, in a mounted state of the connection, the securing ring (8) engages through the aperture (6) of the first component (2) and comes to lie behind the bead (7) of the second component (3) in such a way that a translational and rotational and cardanic tilting movement of the first component (2) with respect to the second component (3) is possible, but it is prevented that the two components (2, 3) are pulled apart from one another.

2. Coupling element (1) according to Claim 1, **characterized in that** the securing ring (8) is designed in such a way that it can be elastically deformed radially outwards and removed from the aperture (6) of the first component (2).

3. Coupling element (1) according to Claim 1 or 2, **characterized in that** the second component (3) has at least one further aperture, through which the correct fit of the securing ring can be observed.

## Revendications

1. Élément de couplage (1) avec compensation de tolérance pour la connexion flexible de deux éléments conducteurs de fluides, en particulier d'un tube ou d'un tuyau flexible avec un autre tube ou tuyau flexible ou avec un ensemble, comprenant un premier composant (2) pour la connexion avec le premier élément, et un deuxième composant (3) pour la connexion avec le deuxième élément, le premier composant (2) et le deuxième composant (3) présentant un dispositif pour une connexion imperdable, et le premier composant (2) et le deuxième composant (3) possédant une direction longitudinale commune, et le premier élément (2) et le deuxième élément (3) étant aptes à être déplacés en translation l'un par rapport à l'autre dans la direction de la direction longitudinale commune, et le premier élément (2) et le deuxième élément (3) étant aptes à être tournés en rotation l'un par rapport à l'autre autour de la direction longitudinale commune, et le premier élément (2) et le deuxième élément (3) étant aptes à être basculés à la cardan l'un par rapport à l'autre perpendiculairement à la direction longitudinale commune, **caractérisé en ce que** le premier composant (2) présente une zone (9) qui s'engage autour d'un seul bourrelet (7) au moins partiellement radial du deuxième composant (3) et qui est espacée du bourrelet (7) par un jeu (10) dans la direction radiale et un jeu (11A, 11B) dans la direction axiale, la connexion imperdable présentant un anneau de verrouillage fendu (8) et le premier composant (2) présentant au moins une ouverture (6) correspondant à l'anneau de verrouillage (8), au moins partiellement radialement périphérique, l'anneau de verrouillage (8), à l'état monté de la connexion, passant à travers l'ouverture (6) du premier composant (2) et venant se placer derrière le bourrelet (7) du deuxième composant (3) de telle sorte qu'un mouvement de translation et de rotation et de basculement à la cardan du premier composant (2) par rapport au deuxième composant (3) soit possible, mais qu'un écartement des deux composants (2, 3) soit empêché.

2. Élément de couplage (1) selon la revendication 1, **caractérisé en ce que** l'anneau de verrouillage (8) est conçu de telle sorte qu'il soit apte à être déformé élastiquement radialement vers l'extérieur et retiré de l'ouverture (6) du premier composant (2).

3. Élément de couplage (1) selon la revendication 1 ou la revendication 2, **caractérisé en ce que** le deuxième composant (3) présente au moins une autre ouverture à travers laquelle le positionnement correct de l'anneau peut être observé.
